# EUROPEAN PATENT SPECIFICATION

(11) **EP 3 342 761 B1**
(45) Date of publication and mention of the grant of the patent: **09.09.2020**
(21) Application number: 17210638.7
(22) Date of filing: 27.12.2017
(51) Int. Cl.: C03C 25/14, C09K 3/22, C09D 191/08, D04H 1/587, D04H 1/64, C08L 91/08, C03C 25/255

(54) **IMPROVED AIDING COMPONENT FOR THE PRODUCTION OF MINERAL WOOL**
VERBESSERTE HILFSMITTEL ZUR HERSTELLUNG VON MINERALWOLLE
COMPOSANT D'AIDE AMÉLIORÉ POUR LA PRODUCTION DE LAINE MINÉRALE

(30) Priority: 27.12.2016 BE 165983
(43) Date of publication of application: 04.07.2018
(73) Proprietor: Govi, 9031 Drongen (BE)
(72) Inventor: COCQUYT, Jan, 9800 Deinze (BE)
(74) Representative: Gevers Patents

(56) References cited:
- WO-A1-2009/046521
- DE-A1- 19 630 254
- US-A1- 2011 190 112
- DATABASE WPI Week 201572 Thomson Scientific, London, GB; AN 2015-53174B XP002780182, & CN 104 762 424 A (ZHANG X) 8 July 2015 (2015-07-08)
- DATABASE WPI Week 201036 Thomson Scientific, London, GB; AN 2010-A80797 XP002780183, & KR 100 924 098 B1 (HANKOOK BIOCHALK CO LTD) 2 November 2009 (2009-11-02)

## Description

### Area of application of the invention

The present invention concerns the production of mineral wool, including glass wool, and other finely distributed materials which give rise to dust formation in their production and use. More particularly, the invention relates to the reduction or avoidance of the formation and propagation of obnoxious dust in the production and use of mineral wool and/or glass wool.

### Background to the invention

Mineral wool, of which rock wool (based on basalt) and glass wool (or "fibre glass") are the best known, but which for example also includes ceramic wool, is made by spinning molten rock (1600ºC) or molten glass (1450ºC). The molten substance, in a high-speed rotating dish known as the "spinning dish", is pressed through fine holes in the side walls of the dish under the influence of centrifugal force. Contact with the colder air around the dish causes the molten substance to harden. The product is a mass of fine, intermeshed fibres with a typical diameter of 6 to 10 µm.

Glass wool in particular, but also many other materials, requires a "binder" to give the product the desired cohesion and mechanical strength. The binder must stick the fibres to each other wherever two are in mutual contact. The binder is cast as a resin onto the fibres as soon as they leave the spinning dish. Often, water-based compositions of formaldehyde glues or other thermo-hardening resins are used as binders. WO 2009/004261 A2 describes a resin based on aldehydes, which are obtained by the oxidative splitting of rapeseed oil and resorcinol. The resulting fibre matting is then brought into its desired form and passed through an oven, wherein the resin of the binder polymerises and hardens, giving the mineral wool its definitive strength and dimensional stability. This heat treatment typically takes place at minimum 200 °C, often even at 230 to 250°C.

In the production of mineral wool, unless special measures are taken, a great deal of dust is released which is unacceptable from the aspect of industrial hygiene, partly because this dust is extremely irritating for anyone coming into contact therewith, which requires the compulsory use of dust masks and other protective measures for limiting exposure to the dust. On later processing and also on use of the mineral wool, mainly as insulation material, dust formation is a significant problem for persons handling the mineral wool. Here again, this dust problem calls for secondary protective measures.

To counter this dust development as well as possible, together with the binder for the fibres i.e. during spinning of the fibres, a so-called dust binder is sprayed onto the fibres. The dust binder typically used is a watery emulsion of an organic agent which must not evaporate or combust even at the high temperatures in the hardening oven. The agent is typically a heavy oil, i.e. an oil with a high boiling point and hence a low volatility, and also a high flame point.

Organic agents with a high boiling point, which means they remain liquid at the high temperatures used during spraying, and which are also characterised by a high flame point which limits the fire risk, are often obtained either from the world of animal and vegetable fats or from the world of heavy by-products from petroleum processing.

US 2003/0205695 A1 describes how a standard dust binding oil obtained from petroleum can be improved by the addition of a small quantity of a glycerol mono-oleate or a quaternary ammonium compound.

Petroleum is still mainly processed for the production of liquid fuels, the oldest product of said processing being lamp oil or kerosene, which is then followed by a lighter fraction known as petrol or gasoline, and then followed by a heavier distilled fraction known as diesel fuel or "middle distillate", and which is also used as a domestic fuel oil. Later, kerosene became more important as a fuel for aircraft engines. These products are thus mainly used as fuels in the transport industry; in the order of volatility, for propelling cars, aircraft and goods vehicles. These products are obtained from petroleum mainly by distillation of the petroleum into fractions with a different boiling range in line with the volatility. A typical petroleum distillation consists of a first atmospheric distillation, the bottom product of which is split in a second distillation under vacuum. The three main products, in the order of volatility, are petrol, kerosene and diesel fuel, and in this structure are split off as lighter products of the definitively remaining bottom product of the vacuum distillation, known as "vacuum gasoil", as a by-product.

But by simply splitting by distillation, large quantities of by-products remain. Secondary techniques have been developed for transforming or converting these by-products, at least partially, into one of the above-mentioned main products: petrol, kerosene or diesel fuel. These secondary conversion techniques however require high investment, which is difficult in particular for relatively small refineries to justify economically. These smaller refineries therefore often still operate in the traditional fashion without - or with only a limited number of - these secondary conversion techniques.

There is therefore still a substantial quantity of by-products available from petroleum processing which can only be used with limitations in applications which would offer a higher value than simply their calorific value. Above all, the heavy by-products of the production process have this problem, and in addition they are often no longer liquid at ambient temperature. Their calorific value can then often only be extracted with secondary interventions, such as heated storage and/or heating pipes up to the point of combustion, which further lowers the value of the by-product even during its production.

This availability of heavy hydrocarbons as by-products of the processing of petroleum has given rise to further cleaning and processing of these by-products, often starting with the vacuum gasoil which remains as the bottom product of the step of vacuum distillation of petroleum. The secondary processing then in turn leads to further secondary by-products. Some of these by-products are however so heavy that they are no longer liquid at ambient temperature or room temperature, often characterised by their so-called "congealing point".

This congealing point is the property which is preferably measured according to ASTM D938, and is best interpreted as the "solidification point". When this parameter has a high value, the further use of by-products even just as fuel becomes more difficult, as already explained above.

In a common process, the vacuum gasoil - which may or may not first have been de-asphalted - is subjected to solvent extraction, normally using a mixture of toluene and methyl ethyl ketone (MEK) which splits the heavy by-product further into a so-called "waxy oil" and an even heavier "residual aromatic extract" (RAE). This RAE may contain a relatively large quantity of aromatics (for example 30%) and naphthenes (for example 41%), the remainder consisting mainly of heavy paraffins. The RAE often has a relatively high congealing point, for example 35 to 37 °C, and hence at ambient temperature forms a solid hydrocarbon product, whereby it can only be used as a liquid fuel with appropriate heating, which significantly reduces the economic value of the RAE. The main product of this extraction, "waxy oil", is then usually de-waxed further as an intermediate product, giving a "bright stock oil" (BSO) which may have a higher value because it remains liquid but with a relatively high viscosity index, whereby it can be used widely in the lubricant industry.

This bright stock oil is also commonly used as an organic agent in the production of glass wool and other mineral wool types. The heavier by-product of the BSO is a so-called "slack wax" or "bright stock slack wax" (BSSW) which thus has a relatively limited application, mainly in the wood sector. This "slack wax" is therefore often split further by being "de-oiled" into a "fully refined wax" as a main product, and as a by-product a so-called "foots oil", a product which contains few or no aromatics and has a congealing point of at least 25 °C. This "foots oil" is a solid hydrocarbon product even at ambient temperature, whereby it cannot be used as a lubricant.

There therefore remains a problem for obtaining added value - either directly, or indirectly by further processing - from the heavy hydrocarbon by-products from the petroleum industry, mainly those which are solid at ambient temperature; a property which is often characterised by a congealing point of at least ambient temperature, which may depend on context, or at least room temperature (usually equivalent to 23°C).

This problem is aggravated because the ever rising demand for liquid fuels from petroleum encourages the refineries to process even heavier crude petroleums, whereby the proportion of by-products which are solid at room temperature in the total production package is steadily increasing.

The world of triglycerides too offers organic raw materials with high boiling points, whereby they remain liquid at relatively high temperatures, and which are also characterised by a high flame point.

Triglycerides typically have either an animal or a vegetable origin. Vegetable triglycerides are in most applications preferred to their animal competitors for a number of reasons. Animal fats are usually less liquid than their vegetable equivalents, because their fatty acid residues have longer carbon chains and/or because their fatty acid residues have a higher degree of saturation than those of vegetable triglycerides.

WO 2009/046521 A1 and US 2010/0279573 A1 describe watery emulsions for use as anti-dusting agents in the production of fibrous insulation products. The organic components used are either hydrocarbon oils, including a bright stock oil (BS150) as described above, or a hydrogenated or non-hydrogenated vegetable oil. In example 5, by way of exception, a 50:50 mixture of palm stearin oil and said BS150 bright stock oil is used. In example 8, only a slack wax is used as an organic component, but its performance remains inferior. As an emulsifier, usually ammonium lignosulphate is used.

DE 19630254 A1 describes how the viscosity of a highly viscous mineral oil can be greatly reduced by mixing it in a 50/50 weight ratio with rapeseed oil, whereby the oil mixture is usable as a dust binding agent in the production of glass wool. Other oils of vegetable or animal origin are also cited as suitable, provided that the viscosity at 20 °C is lower than 100 mm²/s and the flame point higher than 270 °C.

Animal fats are also obtained from slaughterhouse waste, for example as a by-product of meat processing. These fats from slaughterhouse waste are always solid at room temperature and hence certainly at "ambient temperature", as can be characterised by their "congealing point". The animal fats which result from this processing are divided into those which are still deemed suitable for human or animal consumption, known as "category III", and those of lower quality ("category I or II"), which - mainly due to "mad cow disease" or "bovine spongiform encephalopathy" (BSE) because of the risk of prions - are no longer deemed suitable for consumption and therefore usually are only usable as fuel, and then often still under certain strict conditions.

There is therefore a problem for use of these heavy triglycerides which, because of their high congealing point, remain difficult to use for extraction of their calorific value, and certainly those which have been rejected from applications which are related to human or animal consumption.

The object of the present invention is to avoid or at least alleviate the above-mentioned problems and/or in general to provide improvements.

### SUMMARY OF THE INVENTION

According to the invention, a composition is provided, the use thereof and a method for production thereof, as defined in each of the attached claims.

The invention therefore provides a watery composition suitable for binding dust in production of mineral wool, which comprises a surfactant as an emulsifier for the ingredients insoluble in water, and which further comprises, on the basis of its dry substance content,
(a) from 5 to 95% by weight of a hydrocarbon ingredient obtained from petroleum, wherein the hydrocarbon ingredient is selected from the group consisting of "Residual Aromatic Extract" (RAE) and "Foots Oil" and
(b) from 95 to 5% by weight of a triglyceride,
wherein the hydrocarbon ingredient obtained from petroleum and the triglyceride ingredient both have a congealing point, determined to ASTM D938, of at least 23 ºC, and
wherein the hydrocarbon ingredient has a flame point, as measured with the "Cleveland Open Cup" method according to ASTM D92, of at least 250 °C.

We have found that, when mixing a hydrocarbon ingredient obtained from petroleum, wherein the hydrocarbon ingredient is selected from the group consisting of "Residual Aromatic Extract" (RAE) and "Foots Oil", with a triglyceride ingredient as the main ingredients of an organic phase, a type of eutectic occurs, whereby the organic phase formed has a hardness which is significantly lower than would be expected from linear interpolation between the respective hardnesses of the two constituent ingredients. We have found that, on mixing, there are always mixtures which, within a significant range of mixture ratios, have a substantially softer consistency than the two constituent components separately.

The range within which this eutectic of an even softer consistency occurs falls within the two prescribed limits of 95:05 to 05:95, but is not the same for every pair of components. The range of the true eutectic depends on the constituent components selected, but can very easily be determined by the person skilled in the art by a few simple tests.

The eutectic can easily be found by means of a penetration test, preferably to ASTM D5 (with a needle) or to ASTM D217 (with a conical probe), selected to make the differences in penetration depth as clear as possible. The differences sought can be made even more clearly visible if the temperature at which the penetration test is performed is selected to this end.

The inventors have found that this softer consistency of the mixed organic phase has a clear relationship with a better dust binding of the watery emulsion according to the present invention, because this mixed organic phase is the basis for what remains as a cover layer of the fibres on which the emulsion is applied.

The water of the emulsion always vaporises quickly after the emulsion has been sprayed onto the spun fibres, whereby the majority of the organic phase remains as a cover layer on the surface of the fibres. If then later a dust particle touches the cover layer of a fibre, this dust particle penetrates into the cover layer to a specific penetration depth before the dust particle is repelled again from the fibre. The encounter between the dust particle and the fibre, both mainly consisting of mineral wool, is thus - under the influence of the dust binder - not merely an elastic collision, but the dust binder introduces a plastic factor into this encounter as a whole. With a softer consistency, for the same impact, the dust particle penetrates deeper into the cover layer so there is a higher chance that the dust particle will remain attached to the fibre, because it is "bonded" by the dust binder. The plastic component of the encounter will thus gain importance.

This softer consistency of the organic phase of the emulsion therefore, according to the inventors, brings the advantage that on use of this organic phase as a dust binder in production and use of mineral wools, and in particular of glass wool, the dust particles formed penetrate better into this organic phase and have greater difficulty in detaching again, consequently giving a better dust binding.

The inventors have in addition found that this effect is not demonstrated merely in production of mineral wool, but also later in the life of the mineral wool, in the processing, transport and installation of the mineral wool in its final application.

We have furthermore found that the addition of a triglyceride ingredient in the mixture to some extent tempers the dissolution capacity of the hydrocarbon ingredients obtained from petroleum, wherein the hydrocarbon ingredient is selected from the group consisting of "Residual Aromatic Extract" (RAE) and "Foots Oil", which suppresses the compatibility of the organic phase with the glue or binder for the fibres, so that less of the organic phase becomes enclosed in the glue on hardening. Organic phase which becomes enclosed in the matrix of the glue or binder is no longer available for dust binding. In the composition according to the present invention, therefore, more of the anti-dust agent remains available for dust binding, so that either a better dust binding occurs or less organic phase need to be applied to obtain the same dust binding effect. The inventors have found that this effect can be achieved without reducing or losing the compatibility of the watery emulsion according to the present invention with the watery glue or binder which has not yet hardened.

The inventors assert that a clear distinction must be made between emulsion compatibility firstly, which must be sufficiently high to avoid the start of mineral wool precipitation as a result of premature interaction between the anti-dust agent and the binder, and secondly the compatibility between the organic phase in the anti-dust agent and that in the glue phase or binder phase. The latter compatibility is important in the hardening of the glue or binder when the water has largely evaporated from the emulsion. The latter compatibility is preferably limited in order to avoid the inclusion of too much organic phase in the three-dimensional structure of the hardened glue or binder.

The inventors have also found that the ingredients of the organic phase in the composition according to the present invention are less scarce than the oils which are used in the known state of the art as an agent for dust binding in the production of mineral wool. For these conventional oils, both vegetable triglycerides and petroleum hydrocarbons such as the above-mentioned bright stock oil, there is demand from other applications, which means that they are more difficult to obtain under economic conditions which are acceptable for their use as a dust binding agent in the production of mineral wool. As already explained above in the background section, the raw materials with a high congealing point are difficult to use in many applications, including combustion, because of their solid state at ambient temperature. It is therefore a surprising and important advantage of the present invention that this succeeds in mixing together two ingredients, which each alone have a problem of a high congealing point, in order to avoid this problem.

In another embodiment, the present invention provides a method for production of the composition according to the present invention, which comprises the step of mixing the hydrocarbon ingredient and the triglyceride ingredient, and the step of homogenising the formed mixture in the presence of a watery phase and of the surfactant.

The inventors have found that often also the viscosity of the mixture of the two ingredients is surprisingly lower than would be expected from linear interpolation of the viscosities of the two constituent ingredients separately.

The inventors have found that the addition of a triglyceride to a hydrocarbon ingredient obtained from petroleum significantly lowers the viscosity of the mixture. The result is that when the emulsion is formed, the emulsion particles are smaller i.e. have a higher surface area / volume ratio, and that also more particles are formed. This brings the advantage that the emulsion itself has a higher viscosity and is significantly more stable.

The inventors have found that, by firstly mixing the two organic ingredients before homogenising the mixture, homogenisation can often be carried out at a lower temperature, and that this step, because of the relatively low viscosity, also uses less energy in comparison with separate introduction and processing of the two ingredients. We have also found that the emulsion particles thus become smaller, that the viscosity of the resulting emulsion is higher, and that the resulting emulsion is also more stable.

In yet another embodiment, the present invention provides the use of the watery composition according to the present invention as an aid in the production of mineral wool, preferably glass wool.

In an embodiment of the use according to the present invention, the composition is used as a dust binder in the production of mineral wool.

In one embodiment, the present invention provides the use of an organic composition as an agent in the production of mineral wool, wherein the organic composition comprises, on the basis of its dry substance content,
(a) from 5 to 95% by weight of a hydrocarbon ingredient obtained from petroleum, wherein the hydrocarbon ingredient is selected from the group consisting of "Residual Aromatic Extract" (RAE) and "Foots Oil" and
(b) from 95 to 5% by weight of a triglyceride ingredient,
wherein at least one of the hydrocarbon ingredient obtained from petroleum and the triglyceride ingredient has a congealing point of at least 23 ºC, determined to ASTM D938, and
wherein the hydrocarbon ingredient has a flame point, as measured with the "Cleveland Open Cup" method according to ASTM D92, of at least 250 °C.

The inventors have found that it is sufficient for only one of the two organic ingredients to have the prescribed congealing point, in order to obtain a better dust binding in the production of mineral wool and hence the advantageous effects which are described above.

### BRIEF DESCRIPTION OF THE DRAWINGS

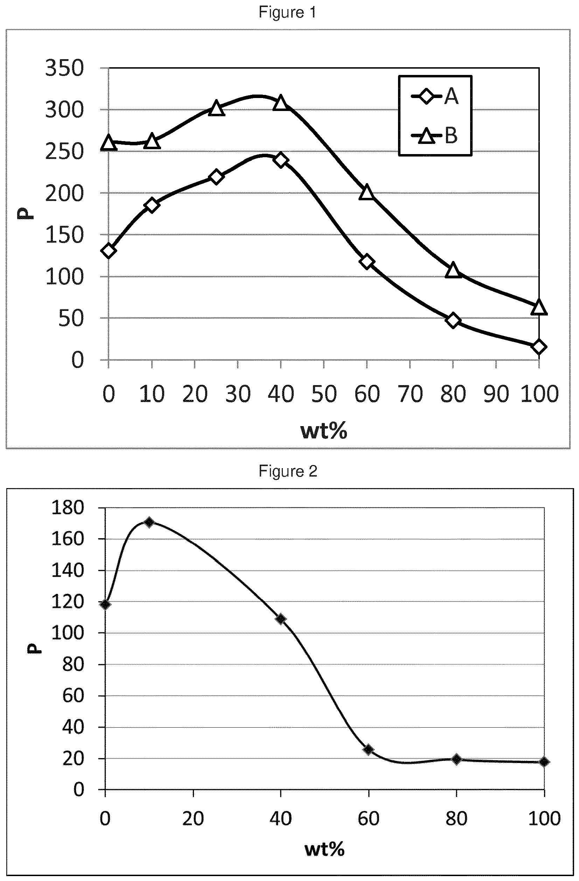

Figures 1 to 4 show the consistency development of a mixed organic phase intended as the basis for the dry substance content of the composition according to the present invention, when ever more of the selected triglyceride component is mixed into a selected hydrocarbon ingredient obtained from petroleum.

### DETAILED DESCRIPTION

The present invention will be described below in specific embodiments and in some cases with reference to certain drawings, but the invention is not restricted thereto but merely by the claims. The possible drawings are merely diagrammatic and not limitative. In the drawings, some of the elements may be depicted in exaggerated fashion and not drawn to scale for illustrative purposes. The dimensions, even relative, in the drawings therefore do not necessarily correspond to how the invention is implemented in practice.

In addition, the terms "first", "second", "third" etc. in the description and in the claims are used to distinguish between equivalent elements, and not necessarily to describe a sequential or chronological order. These terms are mutually interchangeable under appropriate circumstances and embodiments of the invention may occur in different orders than described and illustrated herein.

In addition, the terms "top", "bottom", "above", "below" and similar in the description and in the claims are used for descriptive purposes and do not necessarily indicate relative positions. The terms as used are mutually interchangeable under appropriate circumstances and embodiments of the invention may occur in different orders than described and illustrated herein.

The term "comprise" as used in the claims must not be regarded as being limited to the elements listed in the context thereof. It does not exclude the presence of other elements or steps. It must be regarded as prescribing the presence of the said features, numbers, steps or components as prescribed, but does not exclude the presence or addition of one or more other features, numbers, steps or components, or groups thereof. Thus the scope of "an object comprising means A and B" need not be limited to an object which consists only of means A and B. It means that A and B are some elements relevant to the object in connection with the present invention. Accordingly, the terms "comprise" and "include" also include the more restricted terms "substantially consisting of" and "consisting of".

The watery composition according to the present invention may contain in its dry substance part ingredients other than the prescribed hydrocarbon ingredient obtained from petroleum and the prescribed triglyceride ingredient. These other ingredients are however present to a much smaller extent. The two ingredients prescribed above are those which usually form the basis for the dry substance part of the composition according to the present invention.

In the context of the present invention, the term "hydrocarbon ingredient" means an ingredient which largely consists of hydrocarbons, i.e. compounds constructed solely from carbon and hydrogen atoms. The presence of compounds in which other atoms occur is however not excluded, but these must be sufficiently slight not to cause any substantial changes to the properties which are important for the application in the context of the present invention. Thus the hydrocarbon ingredient may contain sulphur compounds even up to 4% by weight or more of sulphur, or nitrogen compounds, for example up to 2% by weight of nitrogen. The hydrocarbon ingredient may if desired also contain oxygen atoms, but these oxygen atoms must be present only to a low concentration in ester compounds. Ester compounds can be broken off very easily by hydrolysis using known techniques. The low presence of ester compounds in the hydrocarbon ingredient is one of the easily determined features which distinguish the hydrocarbon ingredient from the triglyceride ingredient according to the present invention, which namely consists of esters of fatty acids with glycerol. The properties of the hydrocarbon ingredient which are relevant for the present invention include a low volatility, usually accompanied by a high boiling point, and a high flame point, usually measured with the "Cleveland Open Cup" method according to ASTM D92. In addition, this ingredient must be able to be liquefied with a sufficiently low viscosity at processing temperature, so that the ingredient can be processed at reasonably achievable temperatures.

In the context of the present invention, the triglyceride ingredient is usually of vegetable or animal origin, mostly of animal origin. The triglyceride ingredient consists primarily of esters of fatty acids with glycerol, mainly tri-esters, wherein the fatty acid residues usually have hydrocarbon chains with 6 to 36 carbon atoms which are usually unbranched, with some possible exceptions such as isostearic acid, and which are usually fully saturated, but between which also unsaturated chains may be present to a significant extent, even multiple unsaturated chains.

Because triglyceride ingredients are used here which have a congealing point of at least 23 °C, these ingredients - as explained below - also have a melting point of at least 23 °C so that they are regarded as solid at room temperature, whereby they are described as being "fats".

The inventors have chosen to characterise the ingredients by their so-called solidification point or "congealing point". This is a property which is preferably measured to ASTM D938. The congealing point is a property which differs from the "melting point", which is preferably measured according to ASTM D127 "Drop melting point of petroleum wax including petrolatum". For some substances, the congealing point lies close to the higher melting point, but for other substances, in particular mixtures, the congealing point may sometimes be up to 10 °C lower than the melting point.

The inventors have also found that, when mixing a hydrocarbon ingredient obtained from petroleum, wherein the hydrocarbon ingredient is selected from the group consisting of "Residual Aromatic Extract" (RAE) and "Foots Oil", with a triglyceride ingredient as the main ingredients of an organic phase, also both ingredients having a congealing point of at least 23 °C, a eutectic can occur in the viscosity, whereby an organic phase is formed which has a viscosity which is significantly lower than would be expected by linear interpolation between the respective viscosities of the two constituent ingredients. This brings for example the advantage that the production of the emulsion of a mixed organic phase in water as a continuous carrier requires less energy and can take place more quickly.

We have found that a mixture of the hydrocarbon ingredient and the triglyceride ingredient according to the present invention often has a congealing point which may lie significantly lower than would be expected in the light of the congealing points of the individual ingredients, and sometimes even has a lower congealing point than the lowest congealing point of the two individual main ingredients. This brings the further advantage that this organic phase can be emulsified into an emulsion at a temperature which is lower than would be expected to be required for emulsifying the ingredients. Often, this emulsification may take place at a temperature which is lower than that which would be necessary for emulsifying the individual ingredients, because the mixed organic phase is still liquid and also has a relatively low or at least lower viscosity, while the individual ingredients at the same temperature would not.

Without being bound by this theory, we think that the composition according to the present invention binds the released dust better because of the softer consistency in comparison with what would be expected from the properties of the constituent components or ingredients, but it is not excluded that, with a composition according to the present invention, in particular with the advantage of a lower viscosity, a reduction in dust formation occurs because the fibres are better lubricated with the composition, whereby the fibres break less quickly and less dust occurs in production and use of the mineral wool or glass wool.

We also found that the present invention offers the advantage that, when emulsifying at a specific temperature in a so-called "homogeniser", i.e. an apparatus in which substances can be mixed and emulsions formed under high shear forces, the mixed organic phase gives rise to smaller particles, which gives a better distribution over the watery continuous phase and leads to an emulsion with a higher viscosity, which in turn leads to a significantly more stable emulsion.

The inventors have found that the advantage of a lower viscosity of the mixture in comparison with the two constituent ingredients is achieved above all if one of the two ingredients - either the triglyceride or the hydrocarbon ingredient obtained from petroleum, wherein the hydrocarbon ingredient is selected from the group consisting of "Residual Aromatic Extract" (RAE) and "Foots Oil", - is liquid at 23 °C and at that temperature has a viscosity of maximum 10000 cP as measured with a Brookfield viscometer DV-E with spindle 5 and a rotation speed of 10 rotations per minute (rpm), and after leaving the viscometer running for 1 minute before reading the measurement.

The inventors have found that the mixture ratio or concentrations at which the lower viscosity occurs is dependent on the choice of ingredients and may therefore vary. Also, the point with the lowest congealing point, being the corresponding concentration, may depend on the choice of ingredients. The inventors however assert that this mixing point or the concentrations can be established relatively easily by the person skilled in the art using a limited number of routine experiments.

In one embodiment, the composition according to the present invention comprises at least 6% by weight of the triglyceride ingredient on the basis of its dry substance content, more preferably at least 8%, and even more preferably at least 9%, preferably at least 10%, more preferably at least 12%, preferably at least 15%, more preferably at least 20%, even more preferably at least 25%, preferably at least 30% by weight of the triglyceride ingredient. The inventors have found that the addition of more than the prescribed minimum of triglyceride ingredient can offer an additional advantage in the field of dust binding, primarily because in this way the consistency of the organic phase of the emulsion becomes even softer.

In one embodiment, the composition according to the present invention comprises at most 90% by weight of the triglyceride ingredient on the basis of its dry substance content, preferably at most 85% by weight, more preferably at most 80% by weight, even more preferably at most 75% by weight, and yet even more preferably at most 70% by weight, always on the same basis. The inventors have found that it is important that, in addition to the triglyceride ingredient, other ingredients are present to the appropriate extent in the composition according to the present invention. The inventors have therefore found that, by limiting the proportion of the triglyceride ingredient in the composition according to the invention, more room is released for the addition of other ingredients, including the hydrocarbon ingredient, which then have the opportunity to deploy their own effect on the performance of the emulsion.

In one embodiment, the composition according to the present invention comprises at most 90% by weight of the hydrocarbon ingredient on the basis of its dry substance content, preferably at most 85%, more preferably at most 80%, and even more preferably at most 75%, preferably at most 70%, more preferably at most 65%, even more preferably at most 60% of the hydrocarbon ingredient, always on the same basis.

In one embodiment, the composition according to the invention comprises at least 30% by weight of the hydrocarbon ingredient on the basis of its dry substance content, preferably at least 35% by weight, more preferably at least 40% by weight, even more preferably at least 45% by weight, and yet even more preferably at least 50% by weight, always on the same basis.

The inventors have found that with these preferred concentration levels for the organic phase, in this phase formed by the ingredients belonging to the "dry substance" - primarily the ingredients which are indissoluble in water and hence the ingredients which to a large extent remain after evaporation has removed the water and the volatile constituents - that the softening effect on the consistency is even more pronounced, so that the substance bonding is better.

The inventors have furthermore found that with these preferred concentration levels for the organic phase, the effect of lowering the viscosity and/or the congealing point is even more pronounced, so that the viscosity and/or the congealing point of the mixture in the organic phase falls even further, whereby the advantages of the present invention as described above are even more pronounced.

In one embodiment of the present invention, the hydrocarbon ingredient has a congealing point of at least 24 °C, preferably at least 25 °C, more preferably at least 26 °C, even more preferably at least 27 °C, preferably at least 28 °C, more preferably at least 29 °C, even more preferably at least 30 °C, preferably at least 31 °C, more preferably at least 32 °C, even more preferably at least 33 °C, preferably at least 35 °C, more preferably at least 40 °C, even more preferably at least 45 °C, preferably at least 50 °C, more preferably at least 55 °C, even more preferably at least 60 °C, preferably at least 65 °C, and optionally at most 100 °C, preferably at most 90 °C, more preferably at most 80 °C, even more preferably at most 70 °C, preferably at most 65 °C, more preferably at most 60 °C, even more preferably at most 55 °C, preferably at most 50 °C, more preferably at most 45 °C, even more preferably at most 40 °C, preferably at most 35 °C. The inventors have found that the favourable technical effect of the present invention is also expressed with hydrocarbon ingredients with higher congealing points, as prescribed here. This offers the advantage that hydrocarbon ingredients which are difficult to use in other applications can find a useful application in this invention. These ingredients with high congealing points are usually available at economically very good conditions, so that they can bring economic benefits to the mineral wool production chain and its suppliers.

In one embodiment of the present invention, the hydrocarbon ingredient has a flame point of at least 280 °C, preferably at least 300 °C, more preferably at least 310 °C, and even more preferably at least 320 °C. This brings the advantage that the risk of spontaneous combustion in production of mineral wool is reduced further at the same operating temperature, or work can be carried out at a higher processing temperature without increasing the risk of fire.

In one embodiment of the present invention, the hydrocarbon ingredient has an aniline point of at least 25 °C, preferably at least 40 °C, more preferably at least 50 °C, even more preferably at least 60 °C, and yet even more preferably at least 65 °C. The inventors have found that a higher aniline point offers an advantage because it lowers the compatibility of the hydrocarbon ingredient, i.e. that of the composition according to the present invention, with the resin that is used as a binder in the production of mineral wool. This lowered compatibility ensures that less of the organic phase of the composition is enclosed in the resin when this resin hardens after spraying on the mineral wool. In this way, more of the composition according to the present invention remains able to perform its dust binding function. This therefore leads to a greater suitability of the composition according to the present invention in its application as a dust binder in the production of mineral wool, preferably glass wool, or to the finding that less of this composition is required to obtain the same dust binding effect. The higher aniline point has also a further advantage. Hydrocarbons with a high aniline point have a lower dissolution capacity, whereby these hydrocarbons are prized less as solvents. Therefore certain other technical applications are excluded, or the use of these hydrocarbons in such applications causes secondary difficulties. The demand from these applications for these hydrocarbon ingredients as solvents is therefore lower, whereby their availability for the application according to the present invention is increased.

The hydrocarbon ingredient, selected from the group consisting of "Residual Aromatic Extract" (RAE) and "Foots Oil", occurs mainly from the further processing of the atmospheric residue, i.e. the bottom product of the atmospheric distillation of crude petroleum, a first distillation step which - as explained above - is usually performed on crude petroleum. The atmospheric residue is usually split further in a vacuum distillation step, and each of the fractions which result from this vacuum distillation may lead to products which may serve as hydrocarbon ingredients in the context of the present invention. The inventors prefer suitable products which are derived from the vacuum gasoil or the vacuum residue, i.e. from either a heavy by-product or from the bottom product of the vacuum distillation step. These streams offer the advantage that they are usually already characterised by a high flame point, and that their derived products offer this property which is important for the present invention. Above all, the bottom product from vacuum distillation constitutes an interesting source of suitable molecules for the present invention.

This bottom product, which may or may not first be subjected to a de-asphalting step, is split by extraction using solvents in certain refineries into a product which is liquid at room temperature, known as "Waxy oil" or "Waxy bright stock", and a product which is solid at room temperature, known as "Residual aromatic extract" or RAE. The RAE contains significant concentrations of aromatics (for example 30%) and naphthenes (for example 40%) with further mainly heavy paraffins.

A mixture of waxy oil with a suitable solvent may be split further at low temperature into a liquid and a crystalline solid substance. After solvent removal, firstly a liquid remains which is known as "Bright stock oil" (BSO) or "Bright stock" (BS) and which is usable in the lubricant industry. These bright stock products usually have a figure suffix, e.g. "BS150", and the figure indicates that the viscosity of the oil expressed in Saybolt Universal Second (SUS) at 210 °F according to ASTM D2161. Secondly, a solid product is obtained which is known as "Slack wax" or "Bright stock slack wax" (BSSW).

This slack wax may in turn be split again by mixing when heated with one or more solvents such as a ketone, often methyl ethyl ketone (MEK) or acetone, and then cooling the mixture. By crystallisation, another solid phase is then produced which can be precipitated. From this, after removing the solvents, "Product wax" or "Press wax" is obtained, also known as "Paraffin wax". The liquid phase from this separation of the product wax, after removal of the solvents, leads to a by-product known as "Foots oil".

Petrolatum, often known as "petroleum jelly", "white petrolatum", "soft paraffin" or "vaseline", has a CAS number 8009-03-8 and consists mostly of a mixture of a petroleum-based oil and a petroleum-based wax with relatively high melting point and relatively many branches, sometimes called micro-crystalline wax. Petrolatum has the property of being oxidatively very stable because of the low presence of unsaturated compounds (mostly C=C). The petrolatum family includes substances which may have widely varying melting points and may differ in colour. Technical petrolatums may for example have a melting point of 65 °C or more, and are often yellow to brown in colour. Medical and/or cosmetic petrolatum however usually has a melting point in the region of the human body temperature (37 °C), is colourless or has a pale yellow colour (if not distilled).

The inventors have found that "Residual Aromatic Extract" (RAE) and "Foots Oil" of the above-mentioned intermediate products and end products from the processing of vacuum gasoil may be suitable as hydrocarbon ingredients of the present invention insofar as they fulfil the prescribed characteristics. The inventors have however found that other by-products occur in the complex world of petroleum refinery which may be suitable for the same application. These other by-products need not necessarily be derived from the vacuum gasoil but may occur in the processing of secondary streams from the distillation of crude oil which are diverted at a higher level in or upstream of the distillation towers.

In one embodiment of the present invention, the triglyceride ingredient has a congealing point of at least 25 °C, preferably at least 30°C, more preferably at least 35 °C, and optionally at most 75 °C, preferably at most 70 °C, more preferably at most 65 °C. The inventors have found that triglyceride compositions with a higher congealing point may still be able to offer the advantage of forming the eutectic, wherein the consistency of the mixture is softer than would be expected from the consistencies of the constituent parts of the mixture, and hence achieve the advantage of the present invention, while products with a higher congealing point are more difficult to use as fuel and still more difficult in an application with higher value. The products with higher congealing point are therefore available more generally at economically more favourable conditions than products with a low congealing point.

The triglyceride compositions with a higher congealing point are normally animal fats, mainly obtained from slaughterhouse waste, such as by-products of meat processing. The animal fats which occur in this processing are divided into those which are still deemed suitable for human or animal consumption, known as "category III", and those of lower quality ("category I or II") which - mainly due to "mad cow disease" (BSE) because of the prion risk - are no longer deemed suitable for consumption and therefore usually can only be used as fuel, and then often still under certain conditions. The inventors have found that these animal fats of category I or II can still be used safely as ingredients in a composition which is used as a dust binder in the production of mineral wool.

The inventors have therefore found that triglyceride compositions with a high congealing point, and certainly animal fats of category I and II, are usually not in demand - or are less in demand - for other technical applications, compared with those with a low congealing point, whereby these are often mainly used as fuels, whereby they are less scarce for use according to the present invention as part of a composition intended as a dust binder in the production of mineral wool, and hence may also offer an economic advantage in this application.

In an embodiment of the present invention, the triglyceride ingredient has an iodine value of at most 130 (expressed as grams (g) iodine per 100 grams specimen), preferably at most 100, more preferably at most 75, and even more preferably at most 60. The iodine value is often given without units as a dimensionless value. Limiting the iodine value brings the advantage that the triglyceride ingredient is more stable, more specifically has a higher thermal and/or oxidative stability, which is advantageous for the conservability and processability of the composition as a whole, but also offers advantages in the processing of the triglyceride ingredient for obtaining the composition according to the present invention, and also in further processing of the composition after it has been produced.

In an embodiment of the present invention, the triglyceride ingredient has a flame point (measured to ASTM D92) of at least 230 °C, preferably at least 240 °C, more preferably at least 250 °C, even more preferably at least 260 °C, and yet even more preferably at least 270 °C, preferably at least 280 °C, more preferably at least 290 °C and even more preferably at least 295 °C. This brings the advantage that the risk of combustion in production of the mineral wool is lowered further for the same operating temperature, or that work can be carried out at a higher processing temperature without increasing the risk or danger of fire.

In one embodiment of the present invention, the triglyceride ingredient in the context of the present invention has at most 15% by weight of free fatty acids, preferably at most 10%, more preferably at most 8%, and even more preferably at most 6% by weight of free fatty acids. The inventors have found that a higher content of free fatty acids in a triglyceride composition can significantly reduce the flame point of the composition. A content of free fatty acids as prescribed therefore helps keep the flame point of the triglyceride ingredient high, which reduces the risk of combustion.

In the context of the present invention, the prescribed hydrocarbon ingredient obtained from petroleum and the prescribed triglyceride ingredient constitute at least 90% by weight of the dry substance part of the composition according to the present invention, preferably at least 91%, more preferably at least 92%, even more preferably at least 93%, preferably at least 94%, more preferably at least 94.5%, and even more preferably at least 95.0% by weight of the dry substance part of the composition, and optionally at most 99.0% by weight, preferably at most 98.0%, more preferably at most 97.0%, and even more preferably at most 96.0% of the dry substance part of the composition. The inventors have found that these ingredients are better available from a higher number of sources, and that the use of these ingredients as prescribed here allows the composition to be stored more easily and manufactured more easily because fewer other ingredients need to be provided and used.

In an embodiment of the present invention, the watery composition contains as an emulsifier at least one anionic surfactant . The inventors preferably use a saponified fatty acid as an anionic surfactant. Preferably, the fatty acid has a C16 or C18 carbon chain length. Also preferably, the fatty acid is saturated i.e. has no unsaturated C=C compounds. Preferably, in the saponified fatty acid, a mixture of fatty acids is used, the majority of which are saturated and/or the majority of which have a C16-C18 carbon chain length. Preferably, the fatty acid used has an iodine value of maximum 5. The use of an anionic surfactant offers the advantage that the emulsion particles are electrostatically negatively charged so that they repel each other, whereby the emulsion has a higher stability.

In an embodiment of the present invention, the watery composition contains as an emulsifier at least one non-ionic surfactant. The inventors preferably use an alkoxylate as a non-ionic surfactant. The use of a non-ionic surfactant gives a steric effect, whereby the emulsion is more stable when subjected to high shear forces. A secondary advantage is that the emulsion thus becomes more resistant to the influence of glue, to salt and/or to water hardness.

In an embodiment of the present invention, the watery composition furthermore comprises at least one additive selected from the group consisting of an antifoaming agent and a biocide.

In an embodiment of the method according to the present invention, the hydrocarbon ingredient and the triglyceride ingredient are mixed in the presence of a watery phase, wherein preferably the watery phase together with the surfactant - if present - accounts for 30 to 70% by weight of the whole of the composition, preferably at least 40%, optionally at most 60%, and the organic phase constitutes the remaining part of the composition.

In an embodiment of the method according to the present invention, the watery phase on mixing has a temperature of at most 95 °C, preferably at most 90 °C, more preferably at most 85 °C, and even more preferably at most 80 °C, and optionally at least 60 °C, preferably at least 65 °C, more preferably at least 70 °C, even more preferably at least 75 °C, and yet even more preferably at least 80 °C. This brings the advantage that the watery phase needs to be heated less in preparation of the composition, so that less energy needs to be used in the method according to the present invention. A secondary advantage is that at this temperature, the method can largely be performed at atmospheric pressure, above all during mixing, which prevents the water in the composition from beginning to boil during the method.

In an embodiment of the method according to the present invention, the watery phase on mixing has a temperature of at least 60 °C, preferably at least 65 °C, more preferably at least 70 °C and even more preferably at least 75 °C. This brings the advantage that, above all, the viscosity of the organic phase is lower during mixing and during homogenisation, while the viscosity of the continuous watery phase falls less. The inventors have found that a lower viscosity of the dispersed organic phase offers the advantage that the particle size of the definitive emulsion is lower, also for example if homogenisation is carried out at the same pressure. Because the viscosity of the continuous phase remains relatively high, it remains easy to transfer sufficient energy to the dispersed phase as a result of the turbulence caused, whereby the dispersed particles break up more easily into smaller particles and a finer emulsion is formed.

In one embodiment of the method according to the present invention, the hydrocarbon ingredient and the triglyceride ingredient are mixed while at least the organic ingredients are stirred through each other, preferably at an agitation speed which largely retains the organic phase as a whole. Stirring the organic ingredients through each other leads to a more homogenous organic phase, wherein it is often found that the congealing point thereof is significantly lower than that of at least one of the ingredients selected from the hydrocarbon ingredient and the triglyceride ingredient. This leads to a lower viscosity of the organic phase, whereby the mixing of the organic phase into a homogenous phase takes less energy and is faster. Preferably, the organic phase is largely retained as a whole during this mixing. The purpose of this is to limit or even avoid the risk that, under the influence of excessive agitation speeds and the associated shear forces, separate volumes of organic phase form, which do not participate - or do not participate equally - in forming a homogenous organic phase from the various organic ingredients.

In one embodiment of the method according to the present invention, homogenisation of the mixture takes place under high shear forces, whereby an emulsion of the organic phase in the continuous watery phase is formed. The inventors have found that a "high-shear" homogenisation step is an extremely suitable way of forming a stable composition which can be stored in the long term and remains stable. A suitable apparatus for performing the step of homogenisation is for example an MC 18 homogenizer available from the company APV.

In one embodiment of the method according to the present invention, homogenisation of the mixture takes place at a temperature of at most 95 °C, preferably at most 90 °C, more preferably at most 85 °C, and even more preferably at most 80 °C, and optionally at least 60 °C, preferably at least 65 °C, more preferably at least 70 °C, even more preferably at least 75 °C, and yet even more preferably at least 80 °C. This brings the advantage that the heating of all components which are subjected to homogenisation can be kept limited, so that the method according to the present invention requires less energy.

In an embodiment of the use of the organic composition according to the present invention, the hydrocarbon ingredient obtained from petroleum and the triglyceride ingredient both have a congealing point of at least 23 °C determined according to ASTM D938.

In an embodiment of the use of the organic composition according to the present invention, in which only one of the hydrocarbon ingredient obtained from petroleum and the triglyceride ingredient has a congealing point of less than 23 °C determined according to ASTM D938, this ingredient - which is still liquid at 23 °C - also at 23 °C has a viscosity of maximum 10000 centipoise (cP) as measured with the Brookfield viscometer DV-E with a spindle 5 at a rotation speed of 10 rotations per minute (rpm) and after leaving the viscometer to run for 1 minute before reading the measurement.

In an embodiment of the use of the organic composition according to the present invention in which only one of the hydrocarbon ingredient obtained from petroleum and the triglyceride ingredient has a congealing point of less than 23 °C determined according to ASTM D938, and wherein the same ingredient at 23 °C has a viscosity of maximum 10000 centipoise (cP) as measured with the Brookfield viscometer DV-E, this use obtains a lower viscosity of the organic composition.

In an embodiment of the use of the organic composition according to the present invention, the organic composition furthermore comprises an emulsifier.

In an embodiment of the use of the organic composition according to the present invention, wherein the organic composition furthermore comprises an emulsifier, the organic composition comprises at least 0.25% by weight of emulsifier, more preferably at least 0.50% by weight, more preferably at least 0.70% by weight, even more preferably at least 0.80% by weight, preferably at least 0.90% by weight, more preferably at least 1.0% by weight, even more preferably at least 1.5% by weight, preferably at least 2.0% by weight, more preferably at least 2.5% by weight, even more preferably at least 3.0% by weight, preferably at least 3.5% by weight and more preferably at least 4.0% by weight, always on the basis of the dry substance content of the composition.

In an embodiment of the use of the organic composition according to the present invention, the organic composition is processed into an emulsion, preferably an emulsion based on water as the continuous phase.

In an embodiment of the use of the organic composition according to the present invention, the organic composition comprises at least 6% by weight of the triglyceride ingredient, based on its dry substance content, preferably at least 7% by weight, more preferably at least 8% and even more preferably at least 9%, preferably at least 10%, more preferably at least 12%, preferably at least 15%, more preferably at least 20%, even more preferably at least 25%, preferably at least 30% by weight of the triglyceride ingredient.

In an embodiment of the use of the organic composition according to the present invention, the organic composition comprises at most 90% by weight of the triglyceride ingredient, on the basis of its dry substance content, preferably at most 85% by weight, more preferably at most 80% by weight, even more preferably at most 75% by weight, and yet even more preferably at most 70% by weight, always on the same basis.

In an embodiment of the use of the organic composition according to the present invention, the organic composition comprises at most 90% by weight of the hydrocarbon ingredient on the basis of its dry substance content, preferably at most 85%, more preferably at most 80%, and even more preferably at most 75%, preferably at most 70%, more preferably at most 65%, even more preferably at most 60% of the hydrocarbon ingredient, always on the same basis.

In an embodiment of the use of the organic composition according to the present invention, the organic composition comprises at least 30% by weight of the hydrocarbon ingredient of the basis of its dry substance content, preferably at least 35% by weight, more preferably at least 40% by weight, even more preferably at least 45% by weight, and even more preferably at least 50% by weight, always on the same basis.

In an embodiment of the use of the organic composition according to the present invention, the hydrocarbon ingredient has a congealing point of at least 24 °C, preferably at least 25 °C, more preferably at least 26 °C, even more preferably at least 27 °C, preferably at least 28 °C, more preferably at least 29 °C, even more preferably at least 30 °C, preferably at least 31 °C, more preferably at least 32 °C, even more preferably at least 33 °C, preferably at least 35 °C, more preferably at least 40 °C, even more preferably at least 45 °C, preferably at least 50 °C, more preferably at least 55 °C, even more preferably at least 60 °C, preferably at least 65 °C, and optionally at most 100 °C, preferably at most 90 °C, more preferably at most 80 °C, even more preferably at most 70 °C, preferably at most 65 °C, more preferably at most 60 °C, even more preferably at most 55 °C, preferably at most 50 °C, more preferably at most 45 °C, even more preferably at most 40 °C, preferably at most 35 °C.

In an embodiment of the use of the organic composition according to the present invention, the hydrocarbon ingredient has a flame point of at least 280 °C, preferably at least 300 °C, more preferably at least 310 °C, and even more preferably at least 320 °C.

In an embodiment of the use of the organic composition according to the present invention, the hydrocarbon ingredient has an aniline point of at least 25 °C, preferably at least 40 °C, more preferably at least 50 °C, even more preferably at least 60° C, and yet even more preferably at least 65 °C.

In an embodiment of the use of the organic composition according to the present invention, the hydrocarbon ingredient is selected from the group consisting of "Residual Aromatic Extract" (RAE) and "Foots Oil".

In an embodiment of the use of the organic composition according to the present invention, the triglyceride ingredient has a congealing point of at least 25 °C, preferably at least 30 °C, more preferably at least 35 °C, and optionally at most 75 °C, preferably at most 70 °C, more preferably at most 65 °C.

In an embodiment of the use of the organic composition according to the present invention, the triglyceride ingredient has an iodine value of at most 130 (expressed as g iodine per 100 grams specimen), preferably at most 100, more preferably at most 75, and even more preferably at most 60.

In an embodiment of the use of the organic composition according to the present invention, the triglyceride ingredient has a flame point measured to ASTM D92 of at least 230 °C, preferably at least 240 °C, more preferably at least 250 °C, even more preferably at least 260 °C, and even more preferably at least 270 °C, preferably at least 280 °C, more preferably at least 290 °C and even more preferably at least 295 °C.

In an embodiment of the use of the organic composition according to the present invention, the triglyceride ingredient has a content of free fatty acids at most 15% by weight of free fatty acids, preferably at most 10%, more preferably at most 8% and even more preferably at most 6% by weight of free fatty acids.

In an embodiment of the use of the organic composition according to the present invention, the hydrocarbon ingredient obtained from petroleum and the prescribed triglyceride ingredient constitute at least 90% by weight of the dry substance part of the composition, preferably at least 91%, more preferably at least 92%, even more preferably at least 93%, preferably at least 94%, more preferably at least 94.5%, and even more preferably at least 95.0% by weight of the dry substance part of the composition, and optionally at most 99.0% by weight, preferably at most 98.0%, more preferably at most 97.0%, and even more preferably at most 96.0% of the dry substance part of the composition.

In an embodiment of the use of the organic composition according to the present invention, the organic composition contains as emulsifier at least one anionic surfactant.

In an embodiment of the use of the organic composition according to the present invention, the organic composition contains as emulsifier at least one non-ionic surfactant.

In an embodiment of the use of the organic composition according to the present invention, the organic composition furthermore comprises at least one additive selected from the group consisting of an antifoaming agent and biocide.

In an embodiment of the use of the organic composition according to the present invention, the purpose of the use is to obtain a better dust binding.

### ANALYSIS METHODS

The inventors preferably determine the congealing point of a composition according to standard ASTM D938.

If the composition is a mixture of a hydrocarbon ingredient obtained from petroleum or natural gas with a triglyceride ingredient, possibly also containing a quantity of free fatty acids and/or glycerin, the hydrocarbon ingredient may be separated from this with known means. Thus for example the triglyceride esters and free fatty acids can be saponified, and then by washing with water the saponified acids and glycerin removed in order to obtain the hydrocarbon ingredient. The polar constituents (including the triglycerides and free fatty acids) can also be adsorbed onto a suitable adsorbent such as silica. This leaves mainly the hydrocarbon ingredient, and most of the triglyceride ingredient can be recovered from the adsorbent. In this way, an adequate separation can be obtained in order to determine with sufficient accuracy the congealing point of the separate ingredients of the ingredients indissoluble in water in a composition according to the present invention.

The inventors preferably determine the iodine value of a triglyceride composition according to standard ISO 3961-1989.

The inventors preferably determine the flame point of a composition according to the "Cleveland Open Cup" method, which is described in more detail in ASTM D92 and is sufficiently well known to the person skilled in the art.

The inventors preferably determine the aniline point of a liquid according to the method described in standard ASTM D611. The aniline point is the temperature at which a mixture of 1/1 in volume with aniline still forms one phase or does not split into two different liquid phases. A lower aniline point of an organic liquid is often regarded as an indication of a better dissolution capacity.

The inventors preferably determine the penetration value of a composition to standard ASTM D937 or standard ASTM D1321, depending on the components in the composition. In the context of the present invention, the penetration value is used as a measure of the consistency, solidity or hardness - or conversely the softness - of a semiliquid or semi-solid material. The penetration value is the distance, usually measured in tenths of a millimetre, over which a vertically movable probe or test object, with the help of a shaft attached to a manual penetrometer to ASTM D5 and D217, penetrates vertically into a specimen of the material under a given force during a time period of 5.0±0.1 s at a specific temperature. The inventors chose to adapt the test temperature to the tested compositions. In addition to the choice of the test standard, and hence the choice of whether the penetration is performed with a needle or with a conical probe ("cone"), the inventors also chose to set the test temperature so as to illustrate the differences between measurements of compositions to be compared with each other.

The inventors preferably determine the content of dry substance of a composition using an HR73 Halogen Moisture Analyzer, an HB43-S Halogen Moisture Analyzer from Mettler Toledo, or an XM60 Halogen Moisture Analyzer from Precisa.

These devices are calibrated at least once per year by an external accredited organisation. A specimen of the composition is dried at a temperature above the boiling point of water, preferably 105 °C, until its weight no longer diminishes. Approximately 2 to 3 grams of specimen are placed in an aluminium dish (VWR European article number 611-1353) in which a glass fibre membrane (VWR European Cat. No. 516-0864) is present. Both the dish and the membrane are specifically designed for use in this application. The function of the membrane is to ensure a good spread of emulsion in the dish in order to obtain an efficient and even drying without the risk of splashing. A halogen lamp shines directly onto the membrane with the specimen thereon. A drying cycle preferably begins with an overshoot, wherein the temperature runs up to around 145 °C for 3 minutes and then falls.

Then the specimen is dried further at 105 °C until the weight of the specimen remains constant. The criterion for ending a measurement is a time interval in which the weight varies by less than 1 mg. For simplicity, the inventors propose a total drying time of 140 seconds. With the specimen weight used, they are confident that all water has then disappeared from the specimen.

### EXAMPLES

### Example 1: Consistency of mixtures of RAE with CPO

In Example 1, different mixtures of Residual Aromatic Extract (RAE) as the hydrocarbon ingredient, and "Crude Palm Oil" (CPO) as the triglyceride ingredient, are produced and subjected to a penetration test. The RAE was obtained as Flavex 595 from the company Shell (NL) and had a congealing point of 35 °C and a flame point (COC) of 300 °C. The CPO was obtained as Crude Palm Oil (CPO) from the company Wilmar (BE), and had a congealing point of 33 °C.

The penetration test was performed to standard ASTM D937 on a specimen of these compositions. A first series of tests was performed at a temperature of 0 °C with a standard conical probe according to ASTM D217 and without weight. These results are shown by curve A in figure 1. A second series of tests was performed at a temperature of 12 °C with a standard conical probe according to ASTM D217 with weight. These results are shown by curve B in figure 1.

Figure 1 shows the penetration value measured according to this penetration test in tenths of a millimetre as a function of the weight percentage of crude palm oil (CPO) in the mixture. A eutectic is found here, a range of compositions in which both ingredients are present and within which the mixed compositions give a higher penetration value than the penetration values of the constituent ingredients separately. The penetration values within a specific range are even clearly higher than would be expected from a linear interpolation between the penetration values of the RAE and of the CPO.

These compositions are therefore significantly softer than would be expected from the respective consistencies of the RAE and of the CPO.

### Example 2: Consistency of mixtures of RAE and PS

In Example 2, different mixtures were made of RAE as the hydrocarbon ingredient and palm stearin (PS) as the triglyceride ingredient, and subjected to a penetration test. The RAE used was the same as in Example 1. The PS was obtained as "Refined Palm Stearin" from the company Wilmar (BE) and had a congealing point of 35 °C.

The penetration test was performed according to standard ASTM D937 on a specimen of these compositions at a temperature of 0 °C with a standard conical probe to ASTM D217.

Figure 2 shows the penetration value measured according to this penetration test in tenths of a millimetre as a function of the weight percentage of palm stearin (PS) in the mixture. Again, a eutectic is found here, a range of compositions in which both ingredients are present and within which the mixed compositions give a higher penetration value than the penetration values of the constituent ingredients separately. The penetration values within a specific range are even clearly higher than would be expected from a linear interpolation between the penetration values of the RAE and of the PS.

These compositions are therefore significantly softer than would be expected from the respective consistencies of the RAE and of the PS.

### Example 3: Consistency of mixtures of RAE with animal fat

In Example 3, different mixtures are made of RAE as the hydrocarbon ingredient and animal fat of category III as the triglyceride ingredient, and subjected to a penetration test. The RAE used was from a different consignment than from Examples 1 and 2. This RAE was also obtained as Flavex 595 from the company Shell (NL), and had a congealing point of 35 °C and a flame point (COC) of 300 °C. The animal fat was obtained as Sonac Porc Fat Technical Use ("Rousselot vet Cat. 3") from the company SONAC NV (BE), and had a congealing point of 30°C. This animal fat had a free fatty acid content of maximum 5% by weight and a content of moisture plus impurities of around 1.15% by weight. The fatty acid residues present were approximately 21% C16:0, 3% C16:0, 9% C18:0, 40% C18:1 and 11% C18:2, expressed relative to the total weight of the animal fat.

The penetration test was performed according to standard ASTM D937 on a specimen of these compositions at a temperature of 0 °C with a standard conical probe to ASTM D217.

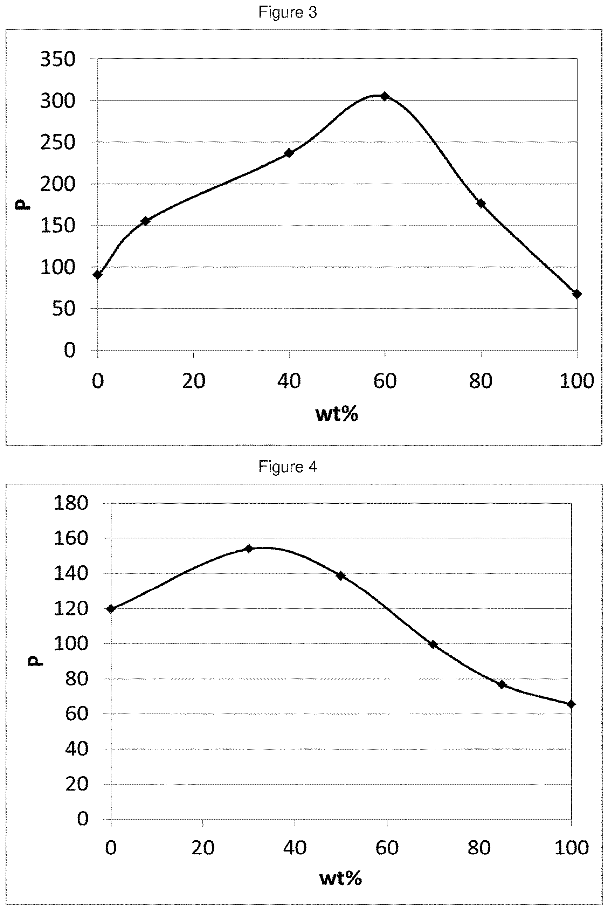

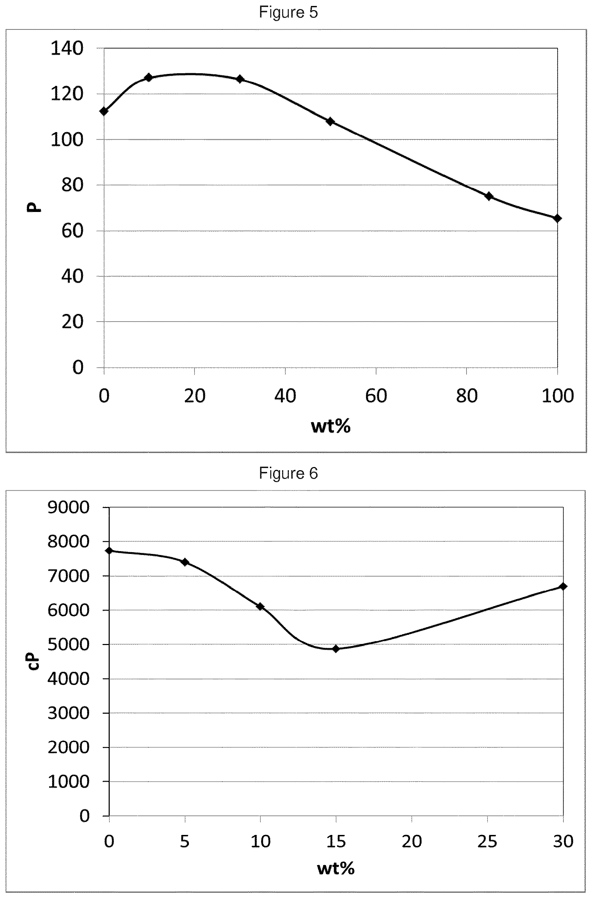

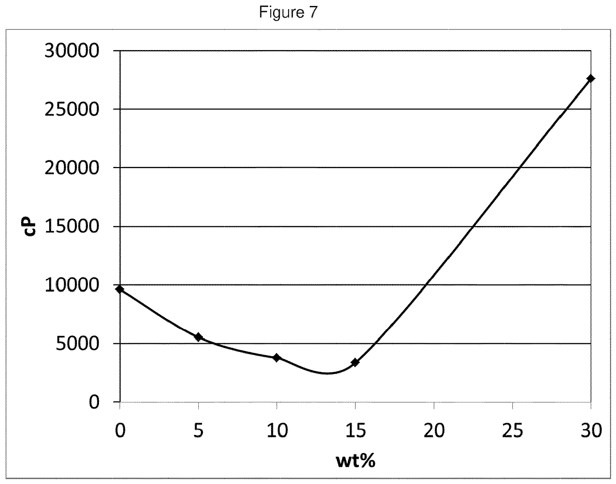

Figure 3 shows the penetration value measured according to this penetration test in tenths of a millimetre as a function of the weight percentage of animal fat of category III in the mixture. Again, a eutectic is found here, a range of compositions in which both ingredients are present and within which the mixed compositions give a higher penetration value than the penetration values of the constituent ingredients separately. The penetration values within a specific range are even clearly higher than would be expected from a linear interpolation between the penetration values of the RAE and of the animal fat.

These compositions are therefore significantly softer than would be expected from the respective consistencies of the RAE and of the animal fat.

### Example 4: Consistency of mixtures of Foots Oil and CPO

In Example 4, different mixtures were made of foots oil as the hydrocarbon ingredient and crude palm oil (CPO) as the triglyceride ingredient, and subjected to a penetration test. The foots oil was obtained as Footsoil 7883 from the company MOL Refinery (HU) and had a congealing point of 48 °C. The CPO used was the same as in Example 1.

The penetration test was performed according to standard ASTM D1321 on a specimen of these compositions at a temperature of 5°C with a standard needle-shaped probe.

Figure 4 shows the penetration value measured according to this penetration test in tenths of a millimetre as a function of the weight percentage of crude palm oil (CPO) in the mixture. Again, a eutectic is found here, a range of compositions in which both ingredients are present and within which the mixed compositions give a higher penetration value than the penetration values of the constituent ingredients separately. The penetration values within a specific range are even clearly higher than would be expected from a linear interpolation between the penetration values of the foots oil and of the CPO.

These compositions are therefore significantly softer than would be expected from the respective consistencies of the foots oil and of the CPO.

## Claims

1. Watery composition suitable for binding dust in production of mineral wool, which comprises a surfactant as an emulsifier for the ingredients insoluble in water, and which furthermore comprises, on the basis of its dry substance content,
(a) from 5 to 95% by weight of a hydrocarbon ingredient obtained from petroleum, wherein the hydrocarbon ingredient is selected from the group consisting of "Residual Aromatic Extract" (RAE) and "Foots Oil" and
(b) from 95 to 5% by weight of a triglyceride,
wherein the hydrocarbon ingredient obtained from petroleum and the triglyceride ingredient both have a congealing point, determined to ASTM D938, of at least 23 ºC;
wherein the hydrocarbon ingredient has a flame point, as measured with the "Cleveland Open Cup" method according to ASTM D92, of at least 250 °C.

2. Composition according to claim 1, which comprises at least 6% by weight of the triglyceride ingredient on the basis of its dry substance content, preferably at least 7% by weight, more preferably at least 8%, and even more preferably at least 9%, preferably at least 10%, more preferably at least 12%, preferably at least 15%, more preferably at least 20%, even more preferably at least 25%, preferably at least 30% of the triglyceride ingredient, and wherein the composition comprises at most 90% by weight of the triglyceride ingredient, on the basis of its dry substance content, preferably at most 85% by weight, more preferably at most 80% by weight, even more preferably at most 75% by weight, and yet even more preferably at most 70% by weight, always on the same basis.

3. Composition according to claim 1 or 2, which comprises at most 90% by weight of the hydrocarbon ingredient on the basis of its dry substance content, preferably at most 85%, more preferably at most 80%, and even more preferably at most 75%, preferably at most 70%, more preferably at most 65%, even more preferably at most 60% of the hydrocarbon ingredient, always on the same basis, and wherein the composition comprises at least 30% by weight of the hydrocarbon ingredient on the basis of its dry substance content, preferably at least 35% by weight, more preferably at least 40% by weight, even more preferably at least 45% by weight, and yet even more preferably at least 50% by weight, always on the same basis.

4. Composition according to any of the preceding claims, wherein the hydrocarbon ingredient has a congealing point of at least 24 °C, preferably at least 25 °C, more preferably at least 26 °C, even more preferably at least 27° C, preferably at least 28 °C, more preferably at least 29 °C, even more preferably at least 30 °C, preferably at least 31 °C, more preferably at least 32 °C, even more preferably at least 33 °C, preferably at least 35 °C, more preferably at least 40° C, even more preferably at least 45 °C, preferably at least 50 °C, more preferably at least 55 °C, even more preferably at least 60 °C, preferably at least 65 °C, and optionally at most 100 °C, preferably at most 90 °C, more preferably at most 80 °C, even more preferably at most 70 °C, preferably at most 65 °C, more preferably at most 60 °C, even more preferably at most 55 °C, preferably at most 50 °C, more preferably at most 45 °C, even more preferably at most 40 °C, preferably at most 35 °C.

5. Composition according to any of the preceding claims, wherein the hydrocarbon ingredient has a flame point, as measured with the "Cleveland Open Cup" method according to ASTM D92, of at least 280 °C, more preferably at least 300 °C, even more preferably at least 310 °C, and even more preferably at least 320 °C.

6. Composition according to any of the preceding claims, wherein the hydrocarbon ingredient has an aniline point of at least 25 °C, preferably at least 40 °C, more preferably at least 50 °C, even more preferably at least 60 °C, and yet even more preferably at least 65 °C.

7. Composition according to any of the preceding claims, wherein the triglyceride ingredient has a congealing point of at least 25 °C, preferably at least 30 °C, more preferably at least 35 °C, and optionally at most 75 °C, preferably at most 70 °C, more preferably at most 65 °C.

8. Composition according to any of the preceding claims, wherein the triglyceride ingredient has an iodine value of at most 130 (expressed as g iodine per 100 grams specimen), preferably at most 100, more preferably at most 75, and even more preferably at most 60.

9. Composition according to any of the preceding claims, wherein the triglyceride ingredient has a flame point, as measured with the "Cleveland Open Cup" method according to ASTM D92, of at least 230 °C, preferably at least 240 °C, more preferably at least 250 °C, even more preferably at least 260 °C, and yet even more preferably at least 270 °C, preferably at least 280 °C, more preferably at least 290 °C, and even more preferably at least 295 °C.

10. Composition according to any of the preceding claims, wherein the hydrocarbon ingredient obtained from petroleum and the prescribed triglyceride ingredient constitute at least 90% by weight of the dry substance part of the composition, preferably at least 91%, more preferably at least 92%, even more preferably at least 93%, preferably at least 94%, more preferably at least 94.5%, and even more preferably at least 95.0% by weight of the dry substance part of the composition, and optionally at most 99.0% by weight, preferably at most 98.0%, more preferably at most 97.0%, and even more preferably at most 96.0% by weight of the dry substance part of the composition.

11. Method for production of the composition according to any of the preceding claims, which comprises the step of mixing the hydrocarbon ingredient and the triglyceride ingredient, and the step of homogenising the formed mixture in the presence of a watery phase and of the surfactant.

12. Method according to claim 11, wherein the hydrocarbon ingredient and the triglyceride ingredient are mixed in the presence of a watery phase, wherein preferably the watery phase together with the surfactant - if present - constitutes 30 to 70% by weight of the whole of the composition, preferably at least 40%, optionally at most 60%, and the organic phase constitutes the remaining part of the composition.

13. Method according to claim 11 or 12, wherein the mixture is homogenised under high shear forces, whereby an emulsion of the organic phase in the still watery phase is formed.

14. Method according to any of claims 11 to 13, wherein the mixture is homogenised at a temperature of at most 95 °C, preferably at most 90 °C, more preferably at most 85 °C, and even more preferably at most 80 °C, and optionally at least 60 °C, preferably at least 65 °C, more preferably at least 70 °C, even more preferably at least 75 °C, and yet even more preferably at least 80 °C.

## Patentansprüche

1. Wässrige Zusammensetzung, geeignet zum Binden von Staub bei der Herstellung von Mineralwolle, welche eine oberflächenaktive Substanz als Emulgator für die in Wasser unlöslichen Bestandteile umfasst, und welche ferner, auf Grundlage ihres Trockensubstanzgehalts, Folgendes umfasst:
(a) von 5 bis 95 Gew.-% eines Kohlenwasserstoffbestandteils erhalten aus Mineralöl, wobei der Kohlenwasserstoffbestandteil ausgewählt ist aus der Gruppe bestehend aus "Residual Aromatic Extract" (RAE - kennzeichnungsfreies Spezialraffinat) und "Foots Oil" (Ausschwitzöl) und
(b) von 95 bis 5 Gew.-% eines Triglyzerids,
wobei der aus Mineralöl erhaltene Kohlenwasserstoffbestandteil und der Triglyzeridbestandteil beide einen Erstarrungspunkt, bestimmt nach ASTM D938, von mindestens 23 °C haben;
wobei der Kohlenwasserstoffbestandteil einen Flammpunkt, wie gemessen mit der "Cleveland Open Cup"-Methode nach ASTM D92, von mindestens 250 °C hat.

2. Zusammensetzung nach Anspruch 1, welche mindestens 6 Gew.-% des Triglyzeridbestandteils auf Grundlage ihres Trockensubstanzgehalts umfasst, bevorzugt mindestens 7 Gew.-%, noch besser mindestens 8 %, und sogar noch besser mindestens 9 %, bevorzugt mindestens 10 %, noch besser mindestens 12 %, bevorzugt mindestens 15 %, noch besser mindestens 20 %, sogar noch besser mindestens 25 %, bevorzugt mindestens 30 % des Triglyzeridbestandteils, und wobei die Zusammensetzung höchstens 90 Gew.-% des Triglyzeridbestandteils auf Grundlage ihres Trockensubstanzgehalts umfasst, bevorzugt höchstens 85 Gew.-%, noch besser höchstens 80 Gew.-%, sogar noch besser höchstens 75 Gew.-%, und sogar noch besser höchstens 70 Gew.-%, jeweils auf derselben Grundlage.

3. Zusammensetzung nach Anspruch 1 oder 2, welche höchstens 90 Gew.-% des Kohlenwasserstoffbestandteils auf Grundlage ihres Trockensubstanzgehalts umfasst, bevorzugt höchstens 85 %, noch besser höchstens 80 %, und sogar noch besser höchstens 75 %, bevorzugt höchstens 70 %, noch besser höchstens 65 %, sogar noch besser höchstens 60 % des Kohlenwasserstoffbestandteils, jeweils auf derselben Grundlage, und wobei die Zusammensetzung mindestens 30 Gew.-% des Kohlenwasserstoffbestandteils auf Grundlage ihres Trockensubstanzgehalts umfasst, bevorzugt mindestens 35 Gew.-%, noch besser mindestens 40 Gew.-%, sogar noch besser mindestens 45 Gew.-%, und sogar noch besser mindestens 50 Gew.-%, jeweils auf derselben Grundlage.

4. Zusammensetzung nach irgendeinem der vorigen Ansprüche, wobei der Kohlenwasserstoffbestandteil einen Erstarrungspunkt von mindestens 24 °C hat, bevorzugt mindestens 25 °C, noch besser mindestens 26 °C, sogar noch besser mindestens 27 °C, bevorzugt mindestens 28 °C, noch besser mindestens 29 °C, sogar noch besser mindestens 30 °C, bevorzugt mindestens 31 °C, noch besser mindestens 32 °C, sogar noch besser mindestens 33 °C, bevorzugt mindestens 35 °C, noch besser mindestens 40 °C, sogar noch besser mindestens 45 °C, bevorzugt mindestens 50 °C, noch besser mindestens 55 °C, sogar noch besser mindestens 60 °C, bevorzugt mindestens 65 °C, und optional höchstens 100 °C, bevorzugt höchstens 90 °C, noch besser höchstens 80 °C, sogar noch besser höchstens 70 °C, bevorzugt höchstens 65 °C, noch besser höchstens 60 °C, sogar noch besser höchstens 55 °C, bevorzugt höchstens 50 °C, noch besser höchstens 45 °C, sogar noch besser höchstens 40 °C, bevorzugt höchstens 35 °C.

5. Zusammensetzung nach irgendeinem der vorigen Ansprüche, wobei der Kohlenwasserstoffbestandteil einen Flammpunkt, wie gemessen mit der "Cleveland Open Cup"-Methode nach ASTM D92, von mindestens 280 °C hat, bevorzugt mindestens 300 °C, sogar noch besser mindestens 310 °C und sogar noch besser mindestens 320 °C.

6. Zusammensetzung nach irgendeinem der vorigen Ansprüche, wobei der Kohlenwasserstoffbestandteil einen Anilinpunkt von mindestens 25 °C hat, bevorzugt mindestens 40 °C, noch besser mindestens 50 °C, sogar noch besser mindestens 60 °C, und sogar noch besser mindestens 65 °C.

7. Zusammensetzung nach irgendeinem der vorigen Ansprüche, wobei der Triglyzeridbestandteil einen Erstarrungspunkt von mindestens 25 °C hat, bevorzugt mindestens 30 °C, noch besser mindestens 35 °C, und optional von höchstens 75 °C, bevorzugt höchstens 70 °C, noch besser höchstens 65 °C.

8. Zusammensetzung nach irgendeinem der vorigen Ansprüche, wobei der Triglyzeridbestandteil einen lodwert von höchstens 130 hat (ausgedrückt als g lod pro 100 Gramm Einzelprobe), bevorzugt höchstens 100, noch besser höchstens 75, und sogar noch besser höchstens 60.

9. Zusammensetzung nach irgendeinem der vorigen Ansprüche, wobei der Triglyzeridbestandteil einen Flammpunkt, wie gemessen mit der "Cleveland Open Cup"-Methode nach ASTM D92, von mindestens 230 °C hat, bevorzugt mindestens 240 °C, noch besser mindestens 250 °C, sogar noch besser mindestens 260 °C, und sogar noch besser mindestens 270 °C, bevorzugt mindestens 280 °C, noch besser mindestens 290 °C, und sogar noch besser mindestens 295 °C.

10. Zusammensetzung nach irgendeinem der vorigen Ansprüche, wobei der Kohlenwasserstoffbestandteil, erhalten aus Mineralöl, und der vorgeschriebene Triglyzeridbestandteil mindestens 90 Gew.-% des Trockensubstanzanteils der Zusammensetzung ausmachen, bevorzugt mindestens 91 %, noch besser mindestens 92 %, sogar noch besser mindestens 93 %, bevorzugt mindestens 94 %, noch besser mindestens 94,5 %, und sogar noch besser mindestens 95,0 Gew.-% des Trockensubstanzanteils der Zusammensetzung, und optional höchstens 99,0 Gew.-%, bevorzugt höchstens 98,0 %, noch besser höchstens 97,0 %, und sogar noch besser höchstens 96,0 Gew.-% des Trockensubstanzanteils der Zusammensetzung.

11. Verfahren zur Herstellung der Zusammensetzung nach irgendeinem der vorigen Ansprüche, welches den Schritt des Mischens des Kohlenwasserstoffbestandteils und des Triglyzeridbestandteils sowie den Schritt des Homogenisierens der gebildeten Mischung in Anwesenheit einer wässrigen Phase und der oberflächenaktiven Substanz umfasst.

12. Verfahren nach Anspruch 11, wobei der Kohlenwasserstoffbestandteil und der Triglyzeridbestandteil in Anwesenheit einer wässrigen Phase gemischt werden, wobei die wässrige Phase bevorzugt zusammen mit der oberflächenaktiven Substanz - falls vorhanden - 30 bis 70 Gew.-% der gesamten Zusammensetzung ausmacht, bevorzugt mindestens 40 %, optional höchstens 60 %, und die organische Phase den verbleibenden Teil der Zusammensetzung ausmacht.

13. Verfahren nach Anspruch 11 oder 12, wobei die Mischung unter hohen Scherkräften homogenisiert wird, wobei in der noch stets wässrigen Phase eine Emulsion der organischen Phase gebildet wird.

14. Verfahren nach irgendeinem der Ansprüche 11 bis 13, wobei die Mischung bei einer Temperatur von höchstens 95 °C homogenisiert wird, bevorzugt höchstens 90 °C, noch besser höchstens 85 °C, und sogar noch besser höchstens 80 °C, und optional mindestens 60 °C, bevorzugt mindestens 65 °C, noch besser mindestens 70 °C, sogar noch besser mindestens 75 °C, und sogar noch besser mindestens 80 °C.

## Revendications

1. Composition aqueuse appropriée pour lier la poussière dans la production de laine minérale, qui comprend un agent tensioactif comme émulsifiant pour les ingrédients insolubles dans l'eau, et qui comprend en outre, sur la base de sa teneur en substance sèche,
a) de 5 à 95 % en poids d'un ingrédient hydrocarboné obtenu à partir du pétrole, où l'ingrédient hydrocarboné est choisi dans le groupe constitué par « l'extrait aromatique résiduel » (RAE) et « l'huile de ressuage » et
b) de 95 à 5 % en poids d'un triglycéride,
dans laquelle l'ingrédient hydrocarboné obtenu à partir du pétrole et l'ingrédient triglycéride ont tous deux un point de figement, déterminé selon la norme ASTM D938, d'au moins 23 °C ;
dans laquelle l'ingrédient hydrocarboné a un point d'inflammabilité, mesuré par le procédé « Cleveland à vase ouvert » selon la norme ASTM D92, d'au moins 250 °C.

2. Composition selon la revendication 1, qui comprend au moins 6 % en poids de l'ingrédient triglycéride sur la base de sa teneur en substance sèche, de préférence au moins 7 % en poids, plus préférablement au moins 8 %, et encore plus préférablement au moins 9 %, de préférence au moins 10 %, plus préférablement au moins 12 %, de préférence au moins 15 %, plus préférablement au moins 20 %, encore plus préférablement au moins 25 %, de préférence au moins 30 % de l'ingrédient triglycéride, et dans laquelle la composition comprend au maximum 90 % en poids de l'ingrédient triglycéride, sur la base de sa teneur en substance sèche, de préférence au maximum 85 % en poids, plus préférablement au maximum 80 % en poids, encore plus préférablement au maximum 75 % en poids, et encore plus préférablement au maximum 70 % en poids, toujours sur la même base.

3. Composition selon la revendication 1 ou 2, qui comprend au maximum 90 % en poids de l'ingrédient hydrocarboné sur la base de sa teneur en substance sèche, de préférence au maximum 85 %, plus préférablement au maximum 80 %, et encore plus préférablement au maximum 75 %, de préférence au maximum 70 %, plus préférablement au maximum 65 %, encore plus préférablement au maximum 60 % de l'ingrédient hydrocarboné, toujours sur la même base, et dans laquelle la composition comprend au moins 30 % en poids de l'ingrédient hydrocarboné sur la base de sa teneur en substance sèche, de préférence au moins 35 % en poids, plus préférablement au moins 40 % en poids, encore plus préférablement au moins 45 % en poids, et encore plus préférablement au moins 50 % en poids, toujours sur la même base.

4. Composition selon l'une quelconque des revendications précédentes, dans laquelle l'ingrédient hydrocarboné présente un point de figement d'au moins 24 °C, de préférence d'au moins 25 °C, plus préférablement d'au moins 26 °C, encore plus préférablement d'au moins 27 °C, de préférence d'au moins 28 °C, plus préférablement d'au moins 29 °C, encore plus préférablement d'au moins 30 °C, de préférence d'au moins 31 °C, plus préférablement d'au moins 32 °C, encore plus préférablement d'au moins 33 °C, de préférence d'au moins 35 °C, plus préférablement d'au moins 40 °C, encore plus préférablement d'au moins 45 °C, de préférence d'au moins 50 °C, plus préférablement d'au moins 55 °C, encore plus préférablement d'au moins 60 °C, de préférence d'au moins 65 °C, et éventuellement au maximum 100 °C, de préférence au maximum 90 °C, plus préférablement au maximum 80 °C, encore plus préférablement au maximum 70 °C, de préférence au maximum 65 °C, plus préférablement au maximum 60 °C, encore plus préférablement au maximum 55 °C, de préférence au maximum 50 °C, plus préférablement au maximum 45 °C, encore plus préférablement au maximum 40 °C, de préférence au maximum 35 °C.

5. Composition selon l'une quelconque des revendications précédentes, dans laquelle l'ingrédient hydrocarboné a un point d'inflammabilité, tel que mesuré par le procédé "Cleveland à vase ouvert" selon la norme ASTM D92, d'au moins 280 °C, plus préférablement d'au moins 300 °C, encore plus préférablement d'au moins 310 °C, et encore plus préférablement d'au moins 320 °C.

6. Composition selon l'une quelconque des revendications précédentes, dans laquelle l'ingrédient hydrocarboné a un point d'aniline d'au moins 25 °C, de préférence d'au moins 40 °C, plus préférablement d'au moins 50 °C, encore plus préférablement d'au moins 60 °C, et encore plus préférablement d'au moins 65 °C.

7. Composition selon l'une quelconques des revendications précédentes, dans laquelle l'ingrédient triglycéride a un point de figement d'au moins 25 °C, de préférence d'au moins 30 °C, plus préférablement d'au moins 35 °C, et éventuellement d'au maximum 75 °C, de préférence d'au maximum 70 °C, plus préférablement d'au maximum 65 °C.

8. Composition selon l'une quelconque des revendications précédentes, dans laquelle l'ingrédient triglycéride a un indice d'iode d'au maximum 130 (exprimé en g d'iode par échantillon de 100 grammes), de préférence d'au maximum 100, plus préférablement d'au maximum 75, et encore plus préférablement d'au maximum 60.

9. Composition selon l'une quelconque des revendications précédentes, dans laquelle l'ingrédient triglycéride a un point d'inflammabilité, tel que mesuré par le procédé « Cleveland à vase ouvert » selon la norme ASTM D92, d'au moins 230 °C, de préférence d'au moins 240 °C, plus préférablement d'au moins 250 °C, encore plus préférablement d'au moins 260 °C, et encore plus préférablement d'au moins 270 °C, de préférence d'au moins 280 °C, plus préférablement d'au moins 290 °C, et encore plus préférablement d'au moins 295 °C.

10. Composition selon l'une quelconque des revendications précédentes, dans laquelle l'ingrédient hydrocarboné obtenu à partir du pétrole et l'ingrédient triglycéride prescrit constituent au moins 90 % en poids de la partie de substance sèche de la composition, de préférence au moins 91 %, plus préférablement au moins 92 %, encore plus préférablement au moins 93 %, de préférence au moins 94 %, plus préférablement au moins 94,5 %, et plus préférablement encore au moins 95,0 % en poids de la partie de substance sèche de la composition, et éventuellement au maximum 99,0 % en poids, de préférence au maximum 98,0 %, plus préférablement au maximum 97,0 %, et plus préférablement encore au maximum 96,0 % en poids de la partie de substance sèche de la composition.

11. Procédé de production de la composition selon l'une quelconque des revendications précédentes, qui comprend l'étape consistant à mélanger l'ingrédient hydrocarboné et l'ingrédient triglycéride, et l'étape consistant à homogénéiser le mélange formé en présence d'une phase aqueuse et de l'agent tensioactif.

12. Procédé selon la revendication 11, dans lequel l'ingrédient hydrocarboné et l'ingrédient triglycéride sont mélangés en présence d'une phase aqueuse, dans lequel de préférence la phase aqueuse avec l'agent tensioactif - s'il est présent - constitue 30 à 70 % en poids de la totalité de la composition, de préférence au moins 40 %, éventuellement au maximum 60 %, et la phase organique constitue la partie restante de la composition.

13. Procédé selon la revendication 11 ou 12, dans lequel le mélange est homogénéisé sous des forces de cisaillement élevées, ce qui permet de former une émulsion de la phase organique dans la phase encore aqueuse.

14. Procédé selon l'une quelconque des revendications 11 à 13, dans lequel le mélange est homogénéisé à une température d'au maximum 95 °C, de préférence d'au maximum 90 °C, plus préférablement d'au maximum 85 °C, et encore plus préférablement d'au maximum 80 °C, et éventuellement d'au moins 60 °C, de préférence d'au moins 65 °C, plus préférablement d'au moins 70 °C, encore plus préférablement d'au moins 75 °C, et encore plus préférablement d'au moins 80 °C.
